# EUROPÄISCHE PATENTSCHRIFT

(11) **EP 1 320 454 B1**
(45) Veröffentlichungstag und Bekanntmachung des Hinweises auf die Patenterteilung: **13.10.2004**
(21) Anmeldenummer: 01982346.7
(22) Anmeldetag: 24.09.2001
(51) Int. Cl.: B29C 65/00, B29C 65/14, B29C 65/16

(54) **VERFAHREN UND EINRICHTUNG ZUR HERSTELLUNG EINES ENDLOSBANDES AUS KUNSTSTOFF FÜR EIN ZWISCHENTRÄGERBAND**
METHOD AND DEVICE FOR PRODUCING CONTINUOUS BELTS FROM PLASTIC FILMS
PROCEDE ET DISPOSITIF POUR LA PRODUCTION D'UNE BANDE CONTINUE DE PLASTIQUE POUR UNE BANDE SUPPORT INTERMEDIAIRE

(30) Priorität: 28.09.2000 DE 10048162
(43) Veröffentlichungstag der Anmeldung: 25.06.2003
(73) Patentinhaber: Océ Printing Systems GmbH, 85586 Poing (DE)
(72) Erfinder: LINK, Robert, 80337 München (DE)
(74) Vertreter: Schaumburg, Thoenes, Thurn, Landskron Patentanwälte
(86) Internationale Anmeldenummer: PCT/EP2001/011033
(87) Internationale Veröffentlichungsnummer: WO 2002/026476

(56) Entgegenhaltungen:
- WO-A-92/07704
- GB-A- 2 278 571
- US-A- 4 197 149
- PATENT ABSTRACTS OF JAPAN vol. 016, no. 572 (C-1010), 11. Dezember 1992 (1992-12-11) & JP 04 224826 A (BRIDGESTONE CORP), 14. August 1992 (1992-08-14)

## Beschreibung

Die Erfindung betrifft ein Verfahren und eine Einrichtung zur Herstellung eines Endlosbandes aus Kunststoff für ein Zwischenträgerband in einem elektrografischen Drucker oder Kopierer.

In elektrografischen Druckern oder Kopierern werden Zwischenträgerbänder eingesetzt, um latente elektrostatische Bilder zu erzeugen und/oder einen Träger für umzudruckende Tonerbilder bereitzustellen. Beispielsweise wird als Zwischenträgerband ein Endlosband mit einer fotoleitenden Schicht, z.B. ein OPC-Band (organic-photo-conducting) verwendet, das durch Belichten gemäß einem vorgegebenen Bildmuster ein entsprechendes elektrostatisches Ladungsbild, ein sogenanntes latentes Ladungsbild, ausbildet. In einer Entwicklerstation wird dann dieses latente Ladungsbild mit Tonermaterial eingefärbt; dieses Tonerbild wird dann später auf Papier oder einen anderen Aufzeichnungsträger übertragen und dort fixiert.

Ein endloses Zwischenträgerband kann auch als Transferband dazu dienen, Tonerbilder aufzusammeln und diese an eine Umdruckstelle weiterzufördern. Beispielsweise bei einem Mehrfarbendruck wird ein erstes Tonerbild einer ersten Farbe auf das Zwischenträgerband übertragen. Anschließend wird auf dieses erste Tonerbild ein zweites Tonerbild mit einer zweiten Farbe übertragen etc.. Die so einander überlagerten, mehrfarbigen Tonerbilder auf dem Zwischenträgerband werden dann zu einer Umdruckstelle gefördert und dort auf den Aufzeichnungsträger übertragen und fixiert.

Zur Herstellung eines endlosen Zwischenträgerbandes müssen Enden einer Kunststofffolie miteinander verbunden werden.

Die dabei entstehende Schweißnaht kann Ursache für zahlreiche Störungen sein. Beispielsweise führt eine Verdickung entlang der Schweißnaht zu einem erhöhten Verschleiß beim Umlaufen des Zwischenträgerbandes. Außerdem können die Materialeigenschaften im Bereich der Schweißnaht verändert sein, so daß dieser Bereich im allgemeinen als fotoleitfähiger Bereich oder als Bereich zur Aufnahme eines Tonerbildes nicht genutzt werden kann.

Aus der DE 19 832 168 A1 ist ein Verfahren und eine Vorrichtung zum Schweißen von thermoplastischen Kunststoffen unter Verwendung von Laserlicht bekannt. Die Enden einer thermoplastischen Kunststofffolie werden auf Stoß angeordnet und können mit Hilfe eines Halteelementes und einer Quarzglasplatte gehalten werden. Über die Quarzglasplatte wird Laserlicht eingekoppelt, wodurch die Enden miteinander verschweißt werden. Besondere Maßnahmen zur Herstellung einer gleichmäßigen Schweißnaht sind nicht beschrieben.

Aus der DE 19 516 726 A1 ist ein Verfahren zum Formen und Verschließen einer Faltschachtel beschrieben, wobei Kunststoffschichten zum Verpacken unter Verwendung von Strahlung miteinander verschweißt werden. Der Schweißvorgang wird durch Aufbringung von Druck unterstützt.

Die DE 3 713 527 A1 beschreibt das Verschweißen von Kunststoffteilen, deren Enden stumpf aneinander geführt werden. Die Kunststoffteile werden an ihren Enden mit Profilen versehen, so daß diese Profile ineinandergreifen können. Mit Hilfe eines Laser-Schweißgeräts werden dann die Enden mit den Profilen miteinander verschweißt.

Aus der EP-A-0 705 682 ist ein Verfahren zum thermischen Verbinden von Substraten aus Polymeren bekannt, bei dem mindestens ein Substrat mit einem Mikrowellen absorbierenden Medium beschichtet wird. Die Substrate werden dann in einem Mikrowellenfeld miteinander verschweißt.

Aus Internet-Informationen der Firma EWi WELDNET, erhältlich unter "http://www.ewi.org/matjoin/plastics/ttir.html; http://www.ewi.org/matjoin/plastics/hotplate.html; http://www.ewi.org/matjoin/plastics/infrared.html", mit dem Titel "Hot Plate Welding" ist es bekannt, Kunststoffteile durch eine Stumpfstoßschweißung miteinander fest zu verbinden. Dabei wird zwischen die sich stirnseitig gegenüberliegenden Kontaktflächen der zu verschweißenden Teile ein Heizelement gebracht, und es werden die Kontaktflächen bis zur Schmelzphase erwärmt. Danach wird das Heizelement entfernt und es werden die gegenüberstehenden Kontaktflächen gegeneinandergedrückt. Nach Abkühlen ergibt sich eine haltbare Verbindung zwischen den Kontaktflächen. Ein solches Verfahren hat jedoch den Nachteil, dass an den Kontaktflächen eine erhabene, aus den Flächen der miteinander verschweißten Teile herausragende Schweißnaht entsteht. Dies ist insbesondere bei Funktionsflächen störend.

Aus der oben genannten Internet-Information mit den Titeln "Through-transmission Infrared Welding TTIR" bzw. "Infrared Heating" ist ein Überlappschweißverfahren bekannt. Dabei werden die Enden von zu verschweißenden Kunststoffteilen übereinandergelegt und durch Infrarotstrahlung oder Laserstrahlung von einer mit den zu verschweißenden Teilen nicht in Kontakt stehenden Strahlungsquelle bis zur Schmelzphase erwärmt. Ein Anwendungsfall dieses Verfahrens ist das Verschweißen eines für die Strahlung transparenten Teils mit einem für die Strahlung undurchlässigen Teil, wobei die Verschweißung im Bereich der aneinanderliegenden Flächen der zu verschweißenden Teile entsteht. Ein weiterer Anwendungsfall dieses Verfahrens ist das Verschweißen von Kunststofffolien an übereinanderliegenden Enden mit Hilfe einer dünnen Zwischenschicht. Das Verfahren eignet sich nicht zur Herstellung von Endlosbändern.

Der Erfindung liegt die Aufgabe zugrunde, ein Verfahren und eine Einrichtung zur Herstellung eines Endlosbandes aus thermoplastischem Kunststoff anzugeben, dessen Oberfläche bei geringem Verschleiß eine große Ausnutzung gestattet.

Diese Aufgabe wird für ein Verfahren zur Herstellung eines Endlosbandes aus Kunststoff für ein Zwischenträgerband in einem elektrografischen Drucker oder Kopierer gelöst, bei dem die Enden einer thermoplastischen Kunststofffolie, die mindestens die Breite eines Standarddruckformats hat, stirnseitig auf Stoß aneinandergelegt werden, die Enden der Kunststofffolie durch Strahlung auf die für die Verschweißung erforderliche Temperatur erhitzt werden, und bei dem beiderseits der Enden jeweils eine Andruckfläche angeordnet wird, deren Länge mindestens der Breite der Kunststofffolie entspricht und die die Flächen der Enden gegeneinander drücken, derart, daß beim Aufschmelzen des Kunststoffmaterials der Stirnseiten der einander gegenüberstehenden Enden der durch die Dicke der kalten Kunststofffolie bestimmte Abstand der Andruckflächen voneinander erhalten bleibt.

Gemäß der Erfindung haben die Andruckflächen einen Abstand voneinander, der durch die Dicke der kalten Kunststofffolie bestimmt ist. Beim Erwärmen der aneinandergrenzenden Enden der Kunststofffolie kann die aufgeschmelzte Masse nicht dicker werden, als dies durch den Abstand der beiden Andruckflächen voneinander vorgegeben ist. Somit hat auch die erkaltete Schweißnaht entlang der gesamten Breite der Kunststofffolie die gleiche Dicke wie die Kunststofffolie selbst. Die Schweißnaht hat also keine erhabene Form und unterliegt auch bei hoher Nutzung des Endlosbandes als Zwischenträgerband in einem Drucker oder Kopierer nur einem geringen Verschleiß. Wie sich in der Praxis gezeigt hat, ist die Schweißnaht so gleichmäßig, daß dieser Bereich bei der Funktion als Zwischenträgerband als Funktionsfläche voll genutzt werden kann. Beispielsweise als fotoleitendes Zwischenträgerband kann der Bereich der Schweißnaht mit fotoleitender Schicht überzogen sein, innerhalb der durch Belichten sich latente Bildstrukturen ausbilden. Bei Verwendung des Endlosbandes als Zwischenträgerband zum Übertragen von Tonerbildern, z.B. auch überlagerten Tonerbildern, kann dieser Bereich der Schweißstelle ebenfalls genutzt werden. Somit ergibt sich, daß ein derart hergestelltes endloses Zwischenträgerband an seiner Oberfläche voll ausgenutzt werden kann, wodurch seine Gesamtlänge kurz sein kann und sich weitere konstruktive Vorteile beim Aufbau des Druckers oder Kopierers ergeben.

Die Kunststofffolie hat mindestens die Breite eines Standarddruckformats, d.h. mindestens die Breite eines DIN-A-4-Blattes. Entsprechend sind auch die Andruckflächen in der jeweiligen Länge auszulegen. Aufgrund der Führung durch die Andruckflächen ist es möglich, entlang dieser relativ großen Breite eine gleichmäßige und funktionstaugliche Schweißnaht zu erzeugen. Die Kraft, die auf die Andruckflächen ausgeübt wird, ist empirisch zu ermitteln. Sie hängt ab von der Art der Kunststofffolie, der Dicke der Kunststofffolie und von der Länge der zu erzeugenden Schweißnaht.

Gemäß einem weiteren Aspekt der Erfindung wird eine Einrichtung zur Herstellung eines Endlosbandes aus thermoplastischem Kunststoff für ein Zwischenträgerband in einem elektrografischen Drucker oder Kopierer angegeben. Die mit dieser Einrichtung erzielbaren Vorteile stimmen mit den beim Verfahren beschriebenen Vorteilen überein.

Die Erfindung wird nachfolgend anhand von Ausführungsbeispielen gemäß den Figuren der Zeichnungen näher erläutert. Es zeigt:
- Figur 1: eine schematische Darstellung eines ersten Ausführungsbeispiels einer erfindungsgemäßen Einrichtung;
- Figur 2: eine schematische Darstellung eines zweiten Ausführungsbeispiels einer erfindungsgemäßen Einrichtung; und
- Figur 3: eine schematische Darstellung eines Teils einer erfindungsgemäßen Einrichtung, der bei den Ausführungsbeispielen nach den Figuren 1 und 2 zusätzlich verwendbar ist,
- Figur 4: eine schematische Darstellung einer erfindungsgemäßen Einrichtung nach Figur 1 mit zwei Absorptionsvorrichtungen als viertes Ausführungsbeispiel,
- Figur 5: eine Absorptionsvprrichtung bestehend aus CrNi-Stahlblech mit einer Absorptionsschicht und
- Figur 6: eine Absorptionsvorrichtung mit einer transparenten Glasscheibe, einer DLC-Schicht und einer Antihaftbeschichtung.

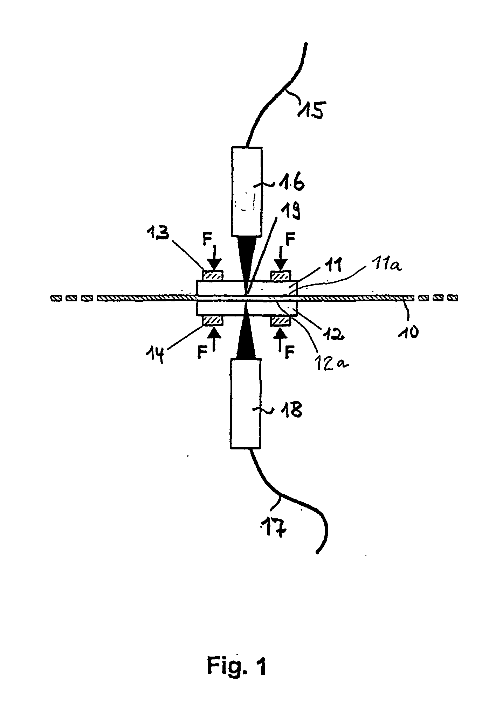

Bei dem Ausführungsbeispiel nach Figur 1 wird eine thermoplastische Kunststofffolie 10 zwischen ein transparentes Halterungselement, beispielsweise eine Glasscheibe 11, und ein transparentes Gegenhalterungselement, ebenfalls beispielsweise eine Glasscheibe 12, so eingelegt, dass die Folienenden stirnseitig exakt stumpf aneinander liegen. Zur Fixierung der Kunststofffolie 10 sowie zur Sicherstellung einer glatten nicht erhabenen Schweißnaht sind Anpressrahmen 13 und 14 vorgesehen, welche eine vorgegebenen Kraft F auf die Glasscheiben 11, 12 und damit auf die Kunststofffolie 10 ausüben. Die an die Kunststofffolie 10 anliegenden ebenenen Flächen der Glasscheiben 11, 12 bilden ebene Andruckflächen 11a, 12a. Alternativ können diese Andruckflächen 11a, 12a auch konzentrisch sein, z.B. Zylinderflächen. Die entsprechenden Glasscheiben sind dann Zylindermantelemente. In senkrechter Richtung zur Papierebene hat die Kunststofffolie eine Breite mindestens der Breite eines Standarddruckformats, z.B. DIN-A4. Die Glasscheiben 11, 12 haben eine Länge, die größer als diese Breite ist.

Über Strahlungsleiterfasern 15 und 17 sowie Fokussieroptiken 16 und 18 wird aus nicht eigens dargestellten Strahlungsquellen zur Erwärmung der Kunststofffolie 10 im Bereich der aneinanderliegenden Folienenden bis über den Schmelzpunkt hinaus Strahlung zugeführt. Dadurch entsteht zwischen den Folienenden eine Schweißnaht 19. Die Strahlungsquellen sind vorzugsweise Laserstrahlungsquellen, wie etwa Diodenlaser, Festkörperlaser, Gaslaser oder Laserdiodenarrays. Je nach Absorptionsvermögen des Materials der Kunststofffolie 10 wird ein bestimmter Teil der Strahlung absorbiert und in Wärme umgesetzt. Die Andruckflächen 11a, 12a haben einen Abstand voneinander, der durch die Dicke der Kunststofffolie 10 in kaltem Zustand bestimmt ist. Bei Erwärmung der Enden der Kunststofffolie 10 und deren Aufschmelzung bleibt dieser Abstand erhalten, d.h. die Kraft F wird entsprechend hoch gewählt. Das aufgeschmolzene Material verteilt sich dann entlang den stumpf aneinander stoßenden Enden mit einer Dicke entsprechend diesem Abstand.

Durch gleichzeitiges Bestrahlen der Kunststofffolie 10 von beiden Seiten über die Fokussieroptiken 16 und 18 kann eine über die gesamte Dicke der Kunststofffolie 10 gleichmäßige Schweißnaht 19 erzielt werden, was besonders bei gut absorbierenden Folienmaterialien vorteilhaft ist. Das Gegenhalterungselement 12 besteht dann aus einem für die Strahlung transparenten Material, wie etwa Glas. Dies ist insbesondere bei Folienmaterialien mit geringer Eindringtiefe der Strahlung, die kleiner als die halbe Foliendicke ist, vorteilhaft. Dabei ist dann kein nennenswerter Transmissionsanteil der Strahlung mehr vorhanden.

Zur Verbesserung der Qualität des Schweißvorganges und zur Kompensation von Folienmaterialschwankungen ist es weiterhin zweckmäßig, die Temperatur im Bereich der Schweißnaht 19 zu messen. In einem Regelkreis kann dann die Temperatur durch Änderung der Strahlungsleistung auf einem definierten Wert konstant gehalten werden.

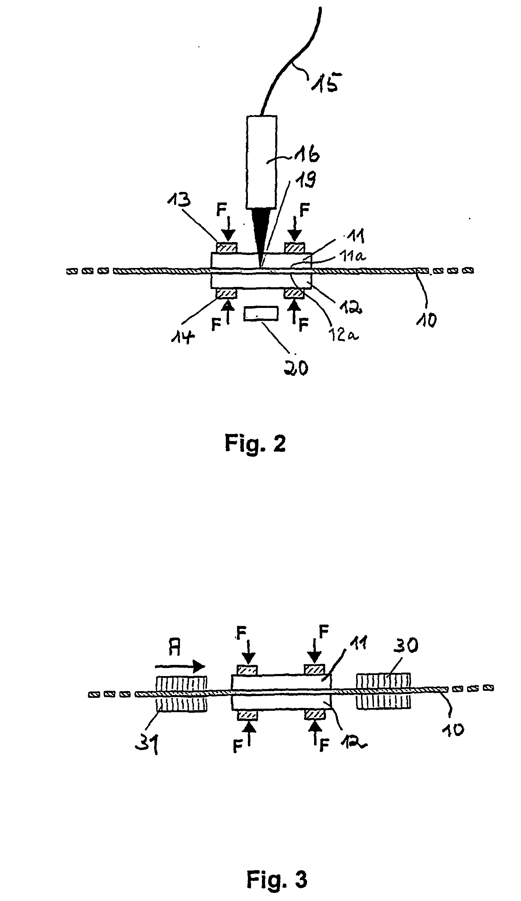

Beim Ausführungsbeispiel nach Figur 2, in der, wie auch in den weiteren Figuren, gleiche Elemente mit gleichen Bezugszeichen versehen sind, ist lediglich auf einer Seite der Kunststofffolie 10 sowie des Halterungselementes 11 und dem Anpressrahmen 13 eine Strahlungsquelle vorgesehen, welche über die Strahlungsleiterfaser 15 und die Fokussieroptik 16 Strahlung für die Schweißnaht 19 liefert.

Bei diesem Ausführungsbeispiel kann bei einem für die Strahlung weitgehend undurchlässigen Material der Kunststofffolie 10 und einem transparenten Gegenhalterungselement 12 zusätzlich eine Kontrolle durchgeführt werden, ob sich zwischen den zu verschweißenden Enden der Kunststofffolie 10 noch ein Spalt befindet. Auf der von der Bestrahlungsseite abgewandten Seite der Kunststofffolie 10 ist hierzu ein Strahlungsdetektor 20, beispielsweise eine Fotodiode, angeordnet, welcher einen eventuell durch einen vorhandenen Spalt durchtretenden Strahlungsanteil erfasst. Nur bei exakter Positionierung der Enden der Kunststofffolie ist der durchtretende Strahlungsanteil nahezu Null. Die genaue Positionierung der Enden der Kunststofffolie 10 kann manuell oder automatisiert durchgeführt werden, wobei der hindurchtretende Strahlungsanteil minimal sein soll.

Bei einem weiteren Ausführungsbeispiel sind die Dicke der Kunststofffolie 10 und die von der Strahlungsquelle 15, 16 gelieferte Strahlung derart aneinander angepasst, dass die optische Eindringtiefe der Strahlung kleiner oder gleich der halben Dicke der Kunststofffolie 10 ist. Dadurch ist gewährleistet, dass der Kunststofffolie 10 genügend Energie zuführbar ist, um sie korrekt verschweißen zu können.

Zur Verbesserung des Wirkungsgrades kann eines der Halterungselemente 11 und 12, vorzugsweise das Gegenhalterungselement 12 vorzugsweise an der betreffenden Andruckfläche 12a reflektierend ausgebildet sein. Dann wird transmittierte Strahlung in die Kunststofffolie 10 zurückgestrahlt. Das Halterungselement 12 kann z.B. als Spiegel oder als poliertes Metallblech ausgebildet sein, vorzugsweise ein Kupfer- oder Aluminiumblech, oder ein reflexionsbeschichtetes Material umfassen.

Bei den vorstehend beschriebenen Ausführungsbeispielen nach den Figuren 1 und 2 sowie bei dem noch zu beschreibenden Ausführungsbeispiel nach Figur 3 können das Halterungselement 11 und das Gegenhalterungselement 12 auf Seiten der Kunststofffolie 10 mit einer nicht eigens dargestellten Antihaftbeschichtung, beispielsweise Teflon oder eine hydrophobe DLC-Beschichtung, versehen werden. Damit wird ein Ankleben der Kunststofffolie 10 während des Schweißvorgangs vermieden.

Um bei der Einrichtung nach Figur 2 mit einer Bestrahlung von nur einer Seite aus eine qualitativ hochwertige Schweißnaht zu gewährleisten, kann die Kunststofffolie 10 auch umgedreht werden, so dass nacheinander eine Bestrahlung von beiden Seiten erfolgt.

Beim Ausführungsbeispiel nach Figur 3, in der ebenfalls gleiche Elemente wie in den Figuren 1 und 2 mit gleichen Bezugszeichen versehen sind, ist eine zusätzliche Einspannung der Kunststoffteile 10 mit Hilfe eines fest gelagerten Einspannelements 30 und eines beweglich gelagerten Einspannelements 31 vorgesehen. Die Bewegung dieser Einspannelemente 30 und 31 zum Aneinanderpressen der Enden der Kunststofffolie 10 ist durch einen Pfeil A angedeutet. Bei anderen Ausführungsbeispielen kann sowohl das Einspannelement 30 als auch das Einspannelement 31 beweglich gelagert sein. Mit Hilfe der Einspannelemente 30, 31 kann durch das Aneinanderpressen die Qualität, inbesondere die Festigkeit der Schweißnaht, verbessert werden.

Die erfindungsgemäße Einrichtung lässt sich mit dem in ihr fixierten Kunststofffolie 10 mit einem Lineartisch in Richtung senkrecht zur Zeichenebene unter der fokussierten Strahlung hindurch bewegen. Es ist ebenso möglich, die Strahlung über den zu verschweißenden und in der erfindungsgemäßen Einrichtung fixierten Folienbereich hinweg zu bewegen. Es muss dann jedoch die Strahlungsquelle, d.h. die Strahlungsleiterfaser 15 bzw. 17 sowie die Fokussieroptik 16 bzw. 18, bewegbar ausgebildet sein. Auch kann die Strahlung z.B. mit einem Galvanometerspiegel abgelenkt oder z.B. mit einer Linienoptik aufgeweitet werden. Im letzteren Fall ist eine gleichzeitige Schweißung über die gesamte Folienbreite möglich.

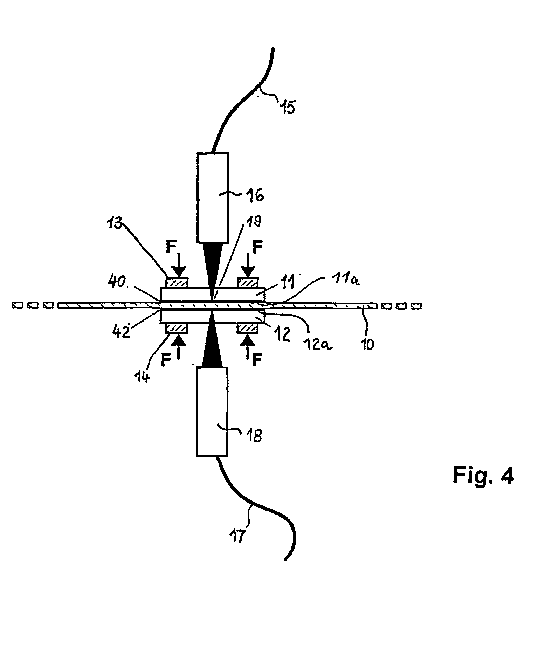

Bei dem Ausführungsbeispiel nach Figur 4, in der gleiche Elemente wie in Figur 1 mit gleichen Bezugszeichen versehen sind, wird zusätzlich zwischen Kunststofffolie 10 und Halterungselement 11, 12 jeweils eine Absorptionsvorrichtung 40, 42 eingesetzt. Die Absorptionsvorrichtung 40 befindet sich unmittelbar zwischen dem Halterungselement 11 und der Kunststofffolie 10 und bildet die erste Andruckfläche 11a. Die Absorptionsvorrichtung 42 liegt unmittelbar zwischen dem Gegenhalterungselement 12 und der Kunststofffolie 10 und bildet die zweite Andruckfläche 12a. Die der Strahlungsquelle 16 bzw. 18 zugewandte Seite der Absorptionsvorrichtung 40, 42 absorbiert jeweils die ausgesendete Strahlungsenergie und wandelt sie in Wärme um, die an die einander gegenüberstehenden Enden der Kunststofffolie 10 weitergegeben wird und die Verschweißung bewirkt. Bei diesem Ausführungsbeispiel kann somit beliebiges thermoplastisches Kunststoffmaterial unabhängig von der jeweiligen Absorptionseigenschaft verwendet werden, beispielsweise vollkommen transparente Kunststofffolie.

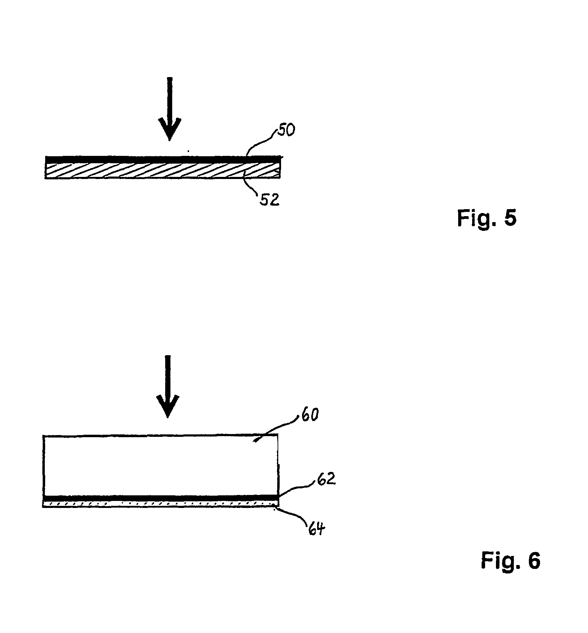

Bei einem weiteren Ausführungsbeispiel nach Figur 5 besteht die Absorptionsvorrichtung 40, 42 aus einem dünnen Metallblech, beispielsweise CrNi-Stahlblech, das zwischen der Kunststofffolie 10 und dem Halterungselement 11, 12 angeordnet ist. Die der Bestrahlungsseite zugewandte Seite des Metallblechs 52 kann zum Zwecke einer verbesserten Absorption aufgerauht oder mit einer absorbierenden Beschichtung 50, insbesondere mit Schwarzchrom oder Ofenlack, versehen werden.

Beim Ausführungsbeispiel nach.Figur 6 besteht die Absorptionsvorrichtung 40, 42 aus einer absorbierenden Schicht 62, insbesondere einer hydrophoben DLC-Schicht oder einer Hartstoffschicht, vorzugsweise jeweils mit ca. 0,2 - 3 µm Dicke, auf einer als Träger dienenden transparenten Glasscheibe 60. Diese Glasscheibe 60 übernimmt gleichzeitig die Funktion des Halterungselements 11 oder 12 (vgl. Figur 4). die absorbierende Schicht 62 kann auf der der Strahlung abgewandten Seite zusätzlich mit einer Antihaftschicht 64, insbesondere einer DLC-Beschichtung, Teflon oder Silikon, vorzugsweise mit einer Dicke von ca. 0,5 - 3 µm, versehen werden. Damit wird ein Ankleben der Kunststofffolie 10 während des Schweißvorgangs vermieden.

Das erfindungsgemäße Verfahren und die erfindungsgemäße Einrichtung sind generell für alle Thermoplaste anwendbar.

Besonders günstig ist die Verwendung von Polyester, Polycarbonat oder Polyamid, gegebenenfalls mit absorbierenden Zusätzen zur Abstimmung der Eindringtiefe der zu absorbierenden Strahlung. Dabei hat sich mit Ruß gefülltes Polyamid oder Polycarbonat als günstig erwiesen. Die Foliendicke liegt vorzugsweise im Bereich von 50 bis 200 µm.

Das erfindungsgemäße Verfahren und die erfindungsgemäße Einrichtung dient zur Herstellung von endlosen Fotoleiterbändern, sogenannten OPC-Bändern (organic-photo-conducting), sowie Transferbändern für elektrofotografische Geräte. Die Schweißnaht ist sehr gleichmäßig und hat die gleiche Dicke wie die Kunststofffolie. Dadurch ist es möglich, auch den Bereich der Schweißnaht als latenten Bildträger oder als Tonerbildträger auszunutzen. Ein derart hergestelltes Endlosband kann daher eine kürzere Länge haben und die Abnutzung im Bereich der Schweißnaht ist verringert.

### Bezugszeichenliste

- 10: Kunststofffolie
- 11: Halterungselement
- 11a: Andruckfläche
- 12: Gegenhalterungselement
- 12a: Andruckfläche
- 13, 14: Anpressrahmen
- 15, 17: Strahlungsleiterfaser
- 16, 18: Fokussieroptik
- 19: Schweißnaht
- 20: Strahlungsdetektor
- 30, 31: Einspannelement
- 40, 42: Absorptionsvorrichtung
- 50: absorbierende Beschichtung
- 52: Metallblech
- 60: Glasscheibe
- 62: absorbierende Schicht
- 64: Antihaftschicht

## Patentansprüche

1. Verfahren zur Herstellung eines Endlosbandes aus Kunststoff für ein Zwischenträgerband in einem elektrografischen Drucker oder Kopierer,
bei dem die Enden einer thermoplastischen Kunststofffolie (10), die mindestens die Breite eines Standarddruckfomats hat, stirnseitig auf Stoß aneinandergelegt werden,
die Enden der Kunststofffolie (10) durch Strahlung auf die für die Verschweißung erforderliche Temperatur erhitzt werden,
und bei dem beiderseits der Enden jeweils eine Andruckfläche (11a, 12a) angeordnet wird, deren Länge mindestens der Breite des Standarddruckformats entspricht und die die Flächen der Enden gegeneinander drücken derart, daß beim Aufschmelzen des Kunststoffmaterials der Stirnseiten der einander gegenüberstehenden Enden der durch die Dicke der kalten Kunststofffolie (10) bestimmte Abstand der Andruckflächen (11a, 12a) voneinander erhalten bleibt.

2. Verfahren nach Anspruch 1, **dadurch gekennzeichnet, dass** die Kunststofffolie (10) durch Strahlung von einer Seite aus erhitzt wird.

3. Verfahren nach Anspruch 1, **dadurch gekennzeichnet, dass** die Kunststofffolie (10) durch Strahlung von beiden Seiten erhitzt wird.

4. Verfahren nach Anspruch 3, **dadurch gekennzeichnet, dass** die Kunststofffolie (10) durch Strahlung gleichzeitig von beiden Seiten erhitzt wird.

5. Verfahren nach Anspruch 3, **dadurch gekennzeichnet, dass** die Kunststofffolie (10) durch Strahlung auf einer Seite erhitzt und nachfolgend nach dem Umdrehen auf der anderen Seite weiter erhitzt wird.

6. Verfahren nach einem der Ansprüche 1 bis 5, **dadurch gekennzeichnet, dass** die Erhitzung der Kunststofffolie (10) durch Laserstrahlung erfolgt.

7. Verfahren nach einem der Ansprüche 1 bis 6, **dadurch gekennzeichnet, daß** die Strahlung jeweils an der der Strahlungsquelle (15, 17) zugewandten Seite der Kunststofffolie (10) absorbiert wird.

8. Verfahren nach einem der Ansprüche 1 bis 7, **dadurch gekennzeichnet, daß** die einander gegenüberstehenden Enden der Kunststofffolie (10) während des Verschweißens gegeneinander vorgespannt werden.

9. Verfahren nach einem der Ansprüche 1 bis 8, **dadurch gekennzeichnet, dass** während des Schweißvorgangs die Termperatur der Kunststofffolie (10) an der Schweißnaht (19) gemessen und die Strahlungsleistung in Abhängigkeit von der gemessenen Temperatur zur Konstanthaltung der Temperatur geregelt wird.

10. Verfahren nach einem der Ansprüche 1 bis 9, **dadurch gekennzeichnet, dass** die Kunststofffolie (10) von einer Seite aus bestrahlt wird und die auf der anderen Seite durch einen Spalt zwischen den zu verschweißenden Enden hindurchgehende Strahlung detektiert wird.

11. Verfahren nach einem der vorhergehenden Ansprüche, **dadurch gekennzeichnet, daß** die Andruckflächen (11a, 12a) durch Platten (11, 12) gebildet werden.

12. Verfahren nach Anspruch 11, **dadurch gekennzeichnet, daß** wenigstens eine der Platten (11, 12) aus einem für die Strahlung transparentem Material, vorzugsweise Glas, besteht, wobei die Platten vorzugsweise eine Antihaftschicht aus Teflon oder hydrophobe DLC-Schicht aufweisen.

13. Verfahren nach einem der vorhergehenden Ansprüche, **dadurch gekennzeichnet, daß** die Dicke der Kunststofffolie (10) und die von der Strahlungsquelle (15, 16) gelieferte Strahlung derart aneinander angepaßt sind, daß die optische Eindringtiefe der Strahlung kleiner oder gleich der halben Dicke der Kunststofffolie (10) ist.

14. Verfahren nach einem der vorhergehenden Ansprüche, **dadurch gekennzeichnet, daß** auf mindestens einer Seite der Kunststofffolie (10) und an ihr anliegend eine Absorptionsvorrichtung (40, 42) zum Absorbieren von Strahlen vorgesehen ist.

15. Verfahren nach Anspruch 14, **dadurch gekennzeichnet, daß** die Absorptionsvorrichtung (40, 42) in unmittelbarem Kontakt an der Kunststofffolie (10) anliegt.

16. Verfahren nach Anspruch 14 oder 15, **dadurch gekennzeichnet, daß** die Absorptionsvorrichtung (40, 42) die Andruckfläche (11a, 12a) bildet.

17. Verfahren nach einem der vorhergehenden Ansprüche, **dadurch gekennzeichnet, daß** die Absorptionsvorrichtung (40, 42) als Metallblech (52), vorzugsweise als CrNi-Stahlblech, ausgebildet ist.

18. Verfahren nach Anspruch 17, **dadurch gekennzeichnet, daß** das Metallblech (52) eine absorbierende Beschichtung (50) trägt, vorzugsweise aus Schwarzchrom oder Ofenlack.

19. Verfahren nach einem der vorhergehenden Ansprüche 17 oder 18, **dadurch gekennzeichnet, daß** die der Strahlungsquelle zugewandte Seite des Metallblechs (52) aufgerauht ist.

20. Verfahren nach einem der vorhergehenden Ansprüche, **dadurch gekennzeichnet, daß** die Absorptionsvorrichtung (40, 42) mit einer absorbierenden Hartstoffschicht oder absorbierenden DLC-Schicht, vorzugsweise der Dicke von 0,2 - 3 µm, versehen ist.

21. Verfahren nach einem der vorhergehenden Ansprüche, **dadurch gekennzeichnet, daß** als Kunststofffolie Polyester, Polycarbonat oder Polyamid verwendet wird.

22. Verfahren nach einem der vorhergehenden Ansprüche, **dadurch gekennzeichnet, daß** die Kunststofffolie aus mit Rußteilchen gefülltem Polyamid besteht.

23. Verfahren nach einem der vorhergehenden Ansprüche, **dadurch gekennzeichnet, daß** die Breite des Standarddruckformats für die Kunststofffolie (10) mindestens dem DIN-A4-Format entspricht.

24. Verfahren nach einem der vorhergehenden Ansprüche, **dadurch gekennzeichnet, daß** die Kunststofffolie (10) eine Dicke im Bereich von 20 bis 500 µm hat, vorzugsweise im Bereich von 50 bis 200 µm.

25. Einrichtung zur Herstellung eines Endlosbandes aus Kunststoff für ein Zwischenträgerband in einem elektrografischen Drucker oder Kopierer,
bei dem die Enden einer thermoplastischen Kunststofffolie (10), die mindestens die Breite eines Standarddruckfomats hat, stirnseitig auf Stoß angeordnet sind,
Mittel vorgesehen sind, die die Enden der Kunststofffolie (10) durch Strahlung auf die für die Verschweißung erforderliche Temperatur erhitzen,
und bei dem beiderseits der Enden jeweils eine Andruckfläche (11a, 12a) angeordnet ist, deren Länge mindestens der Breite des Standarddruckformats entspricht und die die Flächen der Enden gegeneinander drücken derart, daß beim Aufschmelzen des Kunststoffmaterials der Stirnseiten der einander gegenüberstehenden Enden der durch die Dicke der kalten Kunststofffolie (10) bestimmte Abstand der Andruckflächen (11a, 12a) voneinander erhalten bleibt.

26. Einrichtung nach Anspruch 25, **dadurch gekennzeichnet, dass** die Kunststofffolie (10) durch Strahlung von einer Seite aus erhitzt wird.

27. Einrichtung nach Anspruch 25, **dadurch gekennzeichnet, dass** die Kunststofffolie (10) durch Strahlung von beiden Seiten erhitzt wird.

28. Einrichtung nach Anspruch 27, **dadurch gekennzeichnet, dass** die Kunststofffolie (10) durch Strahlung gleichzeitig von beiden Seiten erhitzt wird.

29. Einrichtung nach Anspruch 27, **dadurch gekennzeichnet, dass** die Kunststofffolie (10) durch Strahlung auf einer Seite erhitzt und nachfolgend nach dem Umdrehen auf der anderen Seite weiter erhitzt wird.

30. Einrichtung nach einem der Ansprüche 25 bis 29, **dadurch gekennzeichnet, dass** die Erhitzung der Kunststofffolie (10) durch Laserstrahlung erfolgt.

31. Einrichtung nach einem der vorhergehenen Ansprüche, **dadurch gekennzeichnet, daß** die Strahlung jeweils an der der Strahlungsquelle (15, 17) zugewandten Seite der Kunststofffolie (10) absorbiert wird.

32. Einrichtung nach einem der vorhergehenden Ansprüche, **dadurch gekennzeichnet, daß** die einander gegenüberstehenden Enden der Kunststofffolie (10) während des Verschweißens gegeneinander vorgespannt werden.

33. Einrichtung nach einem der vorhergehenden Ansprüche, **dadurch gekennzeichnet, dass** während des Schweißvorgangs die Termperatur der Kunststofffolie (10) an der Schweißnaht (19) gemessen und die Strahlungsleistung in Abhängigkeit von der gemessenen Temperatur zur Konstanthaltung der Temperatur geregelt wird.

34. Einrichtung nach einem der vorhergehenden Ansprüche, **dadurch gekennzeichnet, dass** die Kunststofffolie (10) von einer Seite aus bestrahlt wird und die auf der anderen Seite durch einen Spalt zwischen den zu verschweißenden Enden hindurchgehende Strahlung detektiert wird.

35. Einrichtung nach einem der vorhergehenden Ansprüche, **dadurch gekennzeichnet, daß** die Andruckflächen (11a, 12a) durch Platten (11, 12) gebildet werden.

36. Einrichtung nach Anspruch 35, **dadurch gekennzeichnet, daß** wenigstens eine der Platten (11, 12) aus einem für die Strahlung transparentem Material, vorzugsweise Glas, besteht, wobei die Platten (11, 12) vorzugsweise eine Antihaftschicht aus Teflon oder eine hydrophobe DLC-Schicht aufweisen.

37. Einrichtung nach einem der vorhergehenden Ansprüche, **dadurch gekennzeichnet, daß** die Dicke der Kunststofffolie (10) und die von der Strahlungsquelle (15, 16) gelieferte Strahlung derart aneinander angepaßt sind, daß die optische Eindringtiefe der Strahlung kleiner oder gleich der halben Dicke der Kunststofffolie (10) ist.

38. Einrichtung nach einem der vorhergehenden Ansprüche, **dadurch gekennzeichnet, daß** auf mindestens einer Seite der Kunststofffolie (10) und an ihr anliegend eine Absorptionsvorrichtung (40, 42) zum Absorbieren von Strahlen vorgesehen ist.

39. Einrichtung nach Anspruch 38, **dadurch gekennzeichnet, daß** die Absorptionsvorrichtung (40, 42) in unmittelbarem Kontakt an der Kunststofffolie (10) anliegt.

40. Einrichtung nach Anspruch 38 oder 39, **dadurch gekennzeichnet, daß** die Absorptionsvorrichtung (40, 42) die Andruckfläche (11a, 12a) bildet.

41. Einrichtung nach einem der vorhergehenden Ansprüche, **dadurch gekennzeichnet, daß** die Absorptionsvorrichtung (40, 42) als Metallblech (52), vorzugsweise als CrNi-Stahlblech, ausgebildet ist.

42. Einrichtung nach Anspruch 41, **dadurch gekennzeichnet, daß** das Metallblech (52) eine absorbierende Beschichtung (50) trägt, vorzugsweise aus Schwarzchrom oder Ofenlack.

43. Einrichtung nach einem der vorhergehenden Ansprüche 41 oder 42, **dadurch gekennzeichnet, daß** die der Strahlungsquelle zugewandte Seite des Metallblechs (52) aufgerauht ist.

44. Einrichtung nach einem der vorhergehenden Ansprüche, **dadurch gekennzeichnet, daß** die Absorptionsvorrichtung (40, 42) mit einer absorbierenden Hartstoffschicht oder absorbierenden DLC-Schicht, vorzugsweise der Dicke von 0,2 - 3 µm, versehen ist, wobei vorzugsweise eine Antihaftschicht der Dicke von 0,5 bis 3 µm auf die Absorptionsvorrichtung aufgebracht ist.

45. Einrichtung nach einem der vorhergehenden Ansprüche, **dadurch gekennzeichnet, daß** als Kunststofffolie Polyester, Polycarbonat oder Polyamid verwendet wird.

46. Einrichtung nach einem der vorhergehenden Ansprüche, **dadurch gekennzeichnet, daß** die Kunststofffolie aus mit Rußteilchen gefülltem Polyamid oder Polycarbonat besteht.

47. Einrichtung nach einem der vorhergehenden Ansprüche, **dadurch gekennzeichnet, daß** die Breite des Standarddruckformats für die Kunststofffolie (10) mindestens dem DIN-A4-Format entspricht.

48. Verfahren nach einem der vorhergehenden Ansprüche, **dadurch gekennzeichnet, daß** die Kunststofffolie (10) eine Dicke im Bereich von 20 bis 500 µm hat, vorzugsweise im Bereich von 50 bis 200 µm.

## Claims

1. A method for manufacturing an endless belt of plastic for an intermediate carrier belt in an electrographic printer or copier,
in which the ends of a thermoplastic plastic film (10) that has at least the width of a standard printing format are abutted on their front sides,
the ends of the plastic film (10) are heated by radiation to the temperature required for welding,
and in which, at both sides of the ends, one pressing surface each is arranged, the length of which pressing surface at least corresponds to the width of the standard printing format and which pressing surface presses the surfaces of the ends against one another such that when the plastic material of the end faces of the ends residing opposite one another melts, the spacing between the pressing surfaces (11 a, 12a) defined by the thickness of the cold plastic film (10) is preserved.

2. Method according to claim 1, **characterized in that** the plastic film (10) is heated by means of radiation proceeding from one side.

3. Method according to claim 1, **characterized in that** the plastic film (10) is heated by radiation from both sides.

4. Method according to claim 3, **characterized in that** the plastic film (10) is heated by radiation simultaneously from both sides.

5. Method according to claim 3, **characterized in that** the plastic film (10) is heated by radiation on one side and, subsequently, after having been turned over, is heated further on the other side.

6. Method according to one of the claims 1 to 5, **characterized in that** the heating of the plastic film (10) is effected by laser radiation.

7. Method according to one of the claims 1 to 6, **characterized in that** the radiation is respectively absorbed at that side of the plastic film (10) facing toward the radiation source (15, 17).

8. Method according to one of the claims 1 to 7, **characterized in that** the ends of the plastic film (10) residing opposite one another are pre-stressed relative to one another during the welding.

9. Method according to one of the claims 1 to 8, **characterized in that** during the welding operation, the temperature of the plastic film (10) at the weld is measured and the radiation power is controlled dependent on the temperature measured for keeping the temperature constant.

10. Method according to one of the claims 1 to 9, **characterized in that** the plastic film (10) is radiated from one side and the radiation passing through a gap between the ends to be welded is measured at the other side.

11. Method according to one of the preceding claims, **characterized in that** the pressing surfaces (11a, 12a) are formed by plates (11, 12).

12. Method according to claim 11, **characterized in that** at least one of the plates (11, 12) is composed of a material transparent for the radiation, preferably glass, the plates preferably having an anti-adhesion layer of Teflon or a hydrophobic DLC layer.

13. Method according to one of the preceding claims, **characterized in that** the thickness of the plastic film (10) and the radiation emitted by the radiation source (15, 16) are adjusted to one another such that the optical penetration depth of the radiation is less than or equal to half the thickness of the plastic film (10).

14. Method according to one of the preceding claims, **characterized in that** on at least one side of the plastic film (10) and in abutting relationship with the same an adsorption device (40, 42) for absorbing radiation is provided.

15. Method according to claim 14, **characterized in that** the absorption device (40, 42) lies in direct contact against the plastic film (10).

16. Method according to claim 14 or 15, **characterized in that** the absorption device (40, 42) forms the pressing surface (11 a, 12a).

17. Method according to one of the preceding claims, **characterized in that** the absorption device (40, 42) is formed as a metal sheet (52), preferably as a CrNi steel sheet.

18. Method according to claim 17, **characterized in that** the metal sheet (52) has an absorbent coating (50), preferably of black chromium or stoving lacquer.

19. Method according to one of the preceding claims 17 or 18, **characterized in that** the side of the metal sheet (52) facing the radiation source is roughened.

20. Method according to one of the preceding claims, **characterized in that** the absorption device (40, 42) is provided with an absorbent hard material layer or absorbent DLC layer, preferably of a thickness of 0.2 - 3 µm.

21. Method according to one of the preceding claims, **characterized in that** polyester, polycarbonate or polyamide is used as a plastic film.

22. Method according to one of the preceding claims, **characterized in that** the plastic film is composed of polyamide filled with soot particles.

23. Method according to one of the preceding claims, **characterized in that** the width of the standard printing format for the plastic film (10) at least corresponds to the DIN A4 format.

24. Method according to one of the preceding claims, **characterized in that** the plastic film (10) has a thickness in the range from 20 to 500 µm, preferably in the range from 50 to 200 µm.

25. Device for manufacturing an endless belt of plastic for an intermediate carrier belt in an electrographic printer or copier,
in which the ends of a thermoplastic plastic film (10) that has at least the width of a standard printing format are abutted on their front sides,
means are provided which heat the ends of the plastic film (10) by radiation to the temperature required for welding,
and in which, at both sides of the ends, one pressing surface (11a, 12a) each is arranged, the length of which pressing surface at least corresponds to the width of the standard printing format and which pressing surface presses the surfaces of the ends against one another such that when the plastic material of the end faces of the ends residing opposite one another melts, the spacing between the pressing surfaces (11 a, 12a) defined by the thickness of the cold plastic film (10) is preserved.

26. Device according to claim 25, **characterized in that** the plastic film (10) is heated by means of radiation proceeding from one side.

27. Device according to claim 25, **characterized in that** the plastic film (10) is heated by radiation from both sides.

28. Device according to claim 27, **characterized in that** the plastic film (10) is heated by radiation simultaneously from both sides.

29. Device according to claim 27, **characterized in that** the plastic film (10) is heated by radiation on one side and, subsequently, after having been turned over, is heated further on the other side.

30. Device according to one of the claims 25 to 29, **characterized in that** the heating of the plastic film (10) is effected by laser radiation.

31. Device according to one of the preceding claims, **characterized in that** the radiation is respectively absorbed at that side of the plastic film (10) facing toward the radiation source (15, 17).

32. Device according to one of the preceding claims, **characterized in that** the ends of the plastic film residing opposite one another are pre-stressed relative to one another during the welding.

33. Device according to one of the preceding claims, **characterized in that** during the welding operation, the temperature of the plastic film (10) at the weld is measured and the radiation power is controlled dependent on the temperature measured for keeping the temperature constant.

34. Device according to one of the preceding claims, **characterized in that** the plastic film (10) is radiated from one side and the radiation passing through a gap between the ends to be welded is measured at the other side.

35. Device according to one of the preceding claims, **characterized in that** the pressing surfaces (11a, 12a) are formed by plates (11, 12).

36. Device according to claim 35, **characterized in that** at least one of the plates (11, 12) is composed of a material transparent for the radiation, preferably glass, the plates (11, 12) preferably having an anti-adhesion layer of Teflon or a hydrophobic DLC layer.

37. Device according to one of the preceding claims, **characterized in that** the thickness of the plastic film (10) and the radiation emitted by the radiation source (15, 16) are adjusted to one another such that the optical penetration depth of the radiation is less than or equal to half the thickness of the plastic film (10).

38. Device according to one of the preceding claims, **characterized in that** on at least one side of the plastic film (10) and in abutting relationship with the same an adsorption device (40, 42) for absorbing radiation is provided.

39. Device according to claim 38, **characterized in that** the absorption device (40, 42) lies in direct contact against the plastic film (10).

40. Device according to claim 38 or 39, **characterized in that** the absorption device (40, 42) forms the pressing surface (11a, 12a).

41. Device according to one of the preceding claims, **characterized in that** the absorption device (40, 42) is formed as a metal sheet (52), preferably as a CrNi steel sheet.

42. Device according to claim 41, **characterized in that** the metal sheet (52) has an absorbent coating (50), preferably of black chromium or stoving lacquer.

43. Device according to one of the preceding claims 41 or 42, **characterized in that** the side of the metal sheet (52) facing the radiation source is roughened.

44. Device according to one of the preceding claims, **characterized in that** the absorption device (40, 42) is provided with an absorbent hard material layer or absorbent DLC layer, preferably of a thickness of 0.2 - 3 µm, an anti-adhesive layer with a thickness from 0.5 to 3 µm being preferably applied to the absorption device.

45. Device according to one of the preceding claims, **characterized in that** polyester, polycarbonate or polyamide is used as a plastic film.

46. Device according to one of the preceding claims, **characterized in that** the plastic film is composed of polyamide or polycarbonate filled with soot particles.

47. Device according to one of the preceding claims, **characterized in that** the width of the standard printing format for the plastic film (10) at least corresponds to the DIN A4 format.

48. Device according to one of the preceding claims, **characterized in that** the plastic film (10) has a thickness in the range from 20 to 500 µm, preferably in the range from 50 to 200 µm.

## Revendications

1. Procédé de fabrication d'une bande sans fin en matière plastique pour une bande de support intermédiaire dans un appareil d'impression ou un copieur électrographique, dans lequel :
les extrémités d'un film de matière thermoplastique (10), qui a au moins la largeur d'un format d'impression standard, sont aboutées du côté avant,
les extrémités du film de matière plastique (10) sont chauffées à la température nécessaire pour réaliser un soudage par rayonnement,
et dans lequel une surface de pressage (11a, 12a), dont la longueur correspond au moins à la largeur du format d'impression standard, est placée de chaque coté des extrémités, et lesdites surfaces de pressage pressent les surfaces des extrémités l'une contre l'autre de sorte que l'écartement des surfaces de pressage (11a, 12a), défini par l'épaisseur du film de matière plastique froid (10), est maintenu lors de la fusion de la matière plastique des côtés avant des extrémités situées l'une en face de l'autre.

2. Procédé selon la revendication 1, **caractérisé en ce que** le film de matière plastique (10) est chauffé d'un seul côté par rayonnement.

3. Procédé selon la revendication 1, **caractérisé en ce que** le film de matière plastique (10) est chauffé des deux côtés par rayonnement.

4. Procédé selon la revendication 3, **caractérisé en ce que** le film de matière plastique (10) est chauffé simultanément des deux côtés par rayonnement.

5. Procédé selon la revendication 3, **caractérisé en ce que** le film de matière plastique (10) est chauffé d'un côté puis est de nouveau chauffé de l'autre côté, après retournement, par rayonnement.

6. Procédé selon l'une des revendications 1 à 5, **caractérisé en ce que** le chauffage du film de matière plastique (10) est effectué par rayonnement laser.

7. Procédé selon l'une des revendications 1 à 6, **caractérisé en ce que** le rayonnement est absorbé du côté du film de matière plastique (10) qui est dirigé vers la source de rayonnement (15, 17)

8. Procédé selon l'une des revendications 1 à 7, **caractérisé en ce que** les extrémités opposées du film de matière plastique (10) sont précontraintes l'une contre l'autre pendant le soudage.

9. Procédé selon l'une des revendications 1 à 8, **caractérisé en ce que**, pendant le processus de soudage, la température du film de matière plastique (10) est mesurée au niveau du cordon de soudure (19), et la puissance du rayonnement est réglée en fonction de la température mesurée afin de maintenir la température constante.

10. Procédé selon l'une des revendications 1 à 9, **caractérisé en ce que** le film de matière plastique (10) est irradié d'un côté, et le rayonnement traversant de l'autre côté par une fente ménagée entre les extrémités à souder est détecté.

11. Procédé selon l'une des revendications précédentes, **caractérisé en ce que** les surfaces de pressage (11a, 12a) sont formées par des plaques (11, 12).

12. Procédé selon la revendication 11, **caractérisé en ce qu'**au moins l'une des plaques (11, 12) est en une matière transparente au rayonnement, avantageusement en verre, les plaques étant avantageusement revêtues d'une couche antiadhésive en Téflon ou bien d'une couche DLC hydrophobe.

13. Procédé selon l'une des revendications précédentes, **caractérisé en ce que** l'épaisseur du film de matière plastique (10) et le rayonnement émis par la source de rayonnement (15, 16) sont adaptés l'un à l'autre de telle sorte que la profondeur de pénétration optique du rayonnement soit inférieure ou égale à la moitié de l'épaisseur du film de matière plastique (10).

14. Procédé selon l'une des revendications précédentes, **caractérisé en ce qu'**il est prévu un dispositif d'absorption (40, 42), destiné à absorber le rayonnement, sur au moins un côté du film de matière plastique (10) en étant appliqué sur celui-ci.

15. Procédé selon la revendication 14, **caractérisé en ce que** le dispositif d'absorption (40, 42) est disposé en contact direct avec le film de matière plastique (10).

16. Procédé selon la revendication 14 ou 15, **caractérisé en ce que** le dispositif d'absorption (40, 42) forme la surface de pressage (11a, 12a).

17. Procédé selon l'une des revendications précédentes, **caractérisé en ce que** le dispositif d'absorption (40, 42) est conformé en tôle métallique (52), avantageusement en tôle d'acier-CrNi.

18. Procédé selon la revendication 17, **caractérisé en ce que** la tôle métallique (52) est dotée d'un revêtement absorbant (50), avantageusement en chrome noir ou vernis au four.

19. Procédé selon l'une des revendications précédentes 17 ou 18, **caractérisé en ce que** le côté de la tôle métallique (52) qui est dirigé vers la source de rayonnement est rendu rugueux.

20. Procédé selon l'une des revendications précédentes, **caractérisé en ce que** le dispositif d'absorption (40, 42) est doté d'une couche de matière dure absorbante, ou bien d'une couche DLC absorbante, avantageusement de 0,2 à 3 µm d'épaisseur.

21. Procédé selon l'une des revendications précédentes, **caractérisé en ce que** l'on utilise comme film de matière plastique du polyester, du polycarbonate ou du polyamide.

22. Procédé selon l'une des revendications précédentes, **caractérisé en ce que** le film de matière plastique est du polyamide rempli de particules de noir de carbone.

23. Procédé selon l'une des revendications précédentes, **caractérisé en ce que** la largeur du format d'impression standard correspond, pour le film de matière plastique (10), au moins au format DIN-A4.

24. Procédé selon l'une des revendications précédentes, **caractérisé en ce que** le film de matière plastique (10) a une épaisseur de l'ordre de 20 à 500 µm, avantageusement de l'ordre de 50 à 200 µm.

25. Dispositif de fabrication d'une bande sans fin en matière plastique pour une bande de support intermédiaire dans un appareil d'impression ou un copieur électrographique, dans lequel :
les extrémités d'un film thermoplastique (10), qui a au moins la largeur d'un format d'impression standard, sont aboutées du côté avant,
il est prévu des moyens qui chauffent les extrémités du film de matière plastique (10) à la température nécessaire pour réaliser un soudage par rayonnement,
et dans lequel une surface de pressage (11a, 12a), dont la longueur correspond au moins à la largeur du format d'impression standard, est placée de chaque coté des extrémités, et lesdites surfaces de pressage pressent les surfaces des extrémités l'une contre l'autre de sorte que l'écartement des surfaces de pressage (11a, 12a), défini par l'épaisseur du film de matière plastique froid (10), est maintenu lors de la fusion de la matière plastique des côtés avant des extrémités situées l'une en face de l'autre.

26. Dispositif selon la revendication 25, **caractérisé en ce que** le film de matière plastique (10) est chauffé d'un seul côté par rayonnement.

27. Dispositif selon la revendication 25, **caractérisé en ce que** le film de matière plastique (10) est chauffé des deux côtés par rayonnement.

28. Dispositif selon la revendication 27, **caractérisé en ce que** le film de matière plastique (10) est chauffé simultanément des deux côtés par rayonnement.

29. Dispositif selon la revendication 27, **caractérisé en ce que** le film de matière plastique (10) est chauffé d'un côté puis est de nouveau chauffé de l'autre côté, après retournement, par rayonnement.

30. Dispositif selon l'une des revendications 25 à 29, **caractérisé en ce que** le chauffage du film de matière plastique (10) est effectué par rayonnement laser.

31. Dispositif selon l'une des revendications précédentes, **caractérisé en ce que** le rayonnement est absorbé du côté du film de matière plastique (10) qui est dirigé vers la source de rayonnement (15, 17)

32. Dispositif selon l'une des revendications précédentes, **caractérisé en ce que** les extrémités opposées du film de matière plastique (10) sont précontraintes l'une contre l'autre pendant le soudage.

33. Dispositif selon l'une des revendications précédentes, **caractérisé en ce que**, pendant le processus de soudage, la température du film de matière plastique (10) est mesurée au niveau du cordon de soudure (19), et la puissance du rayonnement est réglée en fonction de la température mesurée afin de maintenir la température constante.

34. Dispositif selon l'une des revendications précédentes, **caractérisé en ce que** le film de matière plastique (10) est irradié d'un côté, et le rayonnement traversant de l'autre côté par une fente ménagée entre les extrémités à souder est détecté.

35. Dispositif selon l'une des revendications précédentes, **caractérisé en ce que** les surfaces de pressage (11a, 12a) sont formées par des plaques (11, 12).

36. Dispositif selon la revendication 35, **caractérisé en ce qu'**au moins l'une des plaques (11, 12) est en une matière transparente au rayonnement, avantageusement en verre, les plaques étant avantageusement revêtues d'une couche antiadhésive en Téflon ou bien d'une couche DLC hydrophobe.

37. Dispositif selon l'une des revendications précédentes, **caractérisé en ce que** l'épaisseur du film de matière plastique (10) et le rayonnement émis par la source de rayonnement (15, 16) sont adaptés l'un à l'autre de telle sorte que la profondeur de pénétration optique du rayonnement soit inférieure ou égale à la moitié de l'épaisseur du film de matière plastique (10).

38. Dispositif selon l'une des revendications précédentes, **caractérisé en ce qu'**il est prévu un dispositif d'absorption (40, 42), destiné à absorber le rayonnement, sur au moins un côté du film de matière plastique (10) en étant appliqué sur celui-ci.

39. Dispositif selon la revendication 38, **caractérisé en ce que** le dispositif d'absorption (40, 42) est mis en contact direct avec le film de matière plastique (10).

40. Dispositif selon la revendication 38 ou 39, **caractérisé en ce que** le dispositif d'absorption (40, 42) forme la surface de pressage (11a, 12a).

41. Dispositif selon l'une des revendications précédentes, **caractérisé en ce que** le dispositif d'absorption (40, 42) est conformé en tôle métallique (52), avantageusement en tôle d'acier-CrNi.

42. Dispositif selon la revendication 41, **caractérisé en ce que** la tôle métallique (52) est dotée d'un revêtement absorbant (50), avantageusement en chrome noir ou vernis au four.

43. Dispositif selon l'une des revendications précédentes 41 ou 42, **caractérisé en ce que** le côté de la tôle métallique (52) qui est dirigé vers la source de rayonnement est rendu rugueux.

44. Dispositif selon l'une des revendications précédentes, **caractérisé en ce que** le dispositif d'absorption (40, 42) est doté d'une couche de matière dure absorbante, ou bien d'une couche DLC absorbante, avantageusement de 0,2 à 3 µm d'épaisseur, une couche antiadhésive de 0,5 à 3 µm d'épaisseur étant avantageusement appliquée sur le dispositif d'absorption.

45. Dispositif selon l'une des revendications précédentes, **caractérisé en ce que** l'on utilise comme film de matière plastique du polyester, du polycarbonate ou du polyamide.

46. Dispositif selon l'une des revendications précédentes, **caractérisé en ce que** le film de matière plastique est du polyamide rempli de particules de noir de carbone.

47. Dispositif selon l'une des revendications précédentes, **caractérisé en ce que** la largeur du format d'impression standard correspond, pour le film de matière plastique (10), au moins au format DIN-A4.

48. Dispositif selon l'une des revendications précédentes, **caractérisé en ce que** le film de matière plastique (10) a une épaisseur de l'ordre de 20 à 500 µm, avantageusement de l'ordre de 50 à 200 µm.
